# EUROPÄISCHE PATENTANMELDUNG

(11) **EP 1 872 933 A1**
(43) Veröffentlichungstag der Anmeldung: **02.01.2008**
(21) Anmeldenummer: 06012541.6
(22) Anmeldetag: 19.06.2006
(51) Int. Cl.: B32B 3/12, B32B 21/14, E04C 3/36

(54) **Verfahren zur Herstellung eines mit einem Holzfurnier belegten Verbundwerkstoffes**

(71) Anmelder: Lufthansa Technik AG, 22335 Hamburg (DE)
(72) Erfinder: Ziegler, Clemens, 22927 Grosshansdorf (DE); Dorit, Tanja Dietlind, 22395 Hamburg (DE)
(74) Vertreter: Glawe, Delfs, Moll

(57) **Zusammenfassung**

Gegenstand der Erfindung ist ein Verfahren zur Herstellung eines mit einem Holzfurnier belegten Verbundwerkstoffes. Das Verfahren weist folgende Schritte auf: Auftragen eines ersten Klebstofffilms auf die Oberfläche des Kernmaterials, Aushärtenlassen des ersten Klebstofffilms, Glätten (Glattschleifen) des ersten Klebstofffilms, Auftragen eines zweiten Klebstofffilms auf die Oberfläche des ersten Klebstofffilms, Auflegen eines Holzfurniers mit einer Stärke von 0.5 mm oder weniger auf die beleimte Oberfläche, Aushärtenlassen der Verklebung, Auftragen wenigstens einer Lackschicht auf die Oberfläche des Holzfurniers.

## Beschreibung

Die Erfindung betrifft ein Verfahren zur Herstellung eines mit einem Holzfurnier belegten Verbundwerkstoffes sowie einen entsprechenden Verbundwerkstoff.

Für den Innenausbau von Flugzeugen verwendete Materialien sollen möglichst leicht sein und eine hinreichende Feuerfestigkeit aufweisen. Es werden zu diesem Zweck häufig Komposite (bevorzugt mit Sandwich- und Honeycomb-Struktur) verwendet, die beispielsweise Glas-oder Kohlefasern enthalten. Für den Innenausbau von Business-Jets, VIP-Flugzeugen oder dergleichen werden häufig Echtholzoberflächen verlangt.

Der Erfindung liegt die Aufgabe zugrunde, ein Verfahren der eingangs genannten Art zu schaffen, das ein qualitativ hochwertiges Furnieren auch von Leichtbau-Kompositmaterialien gestattet.

Das erfindungsgemäße Verfahren weist folgende Schritte auf:
a) Auftragen eines ersten Klebstofffilms auf die Oberfläche des Kernmaterials,
b) Aushärtenlassen des ersten Klebstofffilms,
c) Glätten (Glattschleifen) des ersten Klebstofffilms,
d) Auftragen eines zweiten Klebstofffilms auf die Oberfläche des ersten Klebstofffilms,
e) Auflegen eines Holzfurniers mit einer Stärke von 0,5 mm oder weniger auf die beleimte Oberfläche,
f) Aushärtenlassen der Verklebung,
g) Auftragen wenigstens einer Lackschicht auf die Oberfläche des Holzfurniers.

Zunächst seien einige im Rahmen der Erfindung verwendete Begriffe erläutert.

Das Kernmaterial ist derjenige Teil des Verbundwerkstoffes, der dem daraus hergestellten Produkt strukturelle Stabilität und mechanische Festigkeit verleiht. Es handelt sich im Rahmen der Erfindung vorzugsweise um ein Leichtbaumaterial, beispielsweise ein Komposit (bevorzugt mit Sandwich- und/oder Honeycomb-Struktur), das in einer Polymermatrix eingebettete strukturverstärkende Materialien wie beispielsweise Glasfasern, Kohlefasern, Aluminium oder Aluminiumlegierungen aufweist.

Die Erfindung ermöglicht die Herstellung qualitativ hochwertiger lackierter Holzfurniere. Im Stand der Technik war dies in mehrerlei Hinsicht problematisch.

Übliche Furnierstärken im Stand der Technik liegen bei etwa 0,7 mm. Hier ergibt sich das Problem, dass beim anschließenden Lackieren des Holzfurniers der Lack in die Poren und Öffnungen des Holzfurniers nach dem Auftragen nachsackt und damit eine unebene Lackoberfläche hervorruft. Diese Unebenheiten beeinträchtigen den optischen Hochglanz der Oberfläche. Aus offenkundiger Vorbenutzung (beispielsweise bei der Herstellung hochglänzender furnierter Klavierlackoberflächen) ist es bereits bekannt, zur Egalisierung dieses Nachsackens den Lack mit Druck auf die Furnieroberfläche aufzubringen und einzuwalzen. Diese Technik kann nur bei druckfesten Kernmaterialien Verwendung finden, nicht jedoch bei leichten Verbundmaterialien, wie sie im Rahmen der Innenausstattung von Flugzeugen Verwendung finden.

Die Erfindung vermeidet beziehungsweise vermindert dieses Nachsacken, indem die Furnierdicke deutlich auf 0,5 mm oder bevorzugt noch weniger verringert wird. Bei einem so dünnen Furnier ergibt sich aber andererseits das Problem, dass sich die unebene Struktur des Kernmaterials (beispielsweise die Glasfasern eines Glasfaserverbundmaterials) durch das Furnier durchdrücken und wiederum die Oberflächenqualität beeinträchtigen kann. Erfindungsgemäß wird daher der Verbundwerkstoff zweimal mit einem Klebstofffilm belegt, bevor das Furnier aufgebracht wird. Der erste Klebstofffilm wird aufgetragen, aushärten gelassen und anschließend geglättet, insbesondere glattgeschliffen bzw. plan geschliffen. Man erreicht so eine Egalisierung der Oberfläche des Kernmaterials. Der Begriff "erster Klebstofffilm" umfasst somit jegliche Schicht, die aufgrund ihres hohen Harzanteils eine anschließende Egalisierung der Oberfläche ermöglicht. Es kann sich erfindungsgemäß auch um eine äußere Schicht des Grundharzes des Verbundwerkstoffes handeln, die wenig oder keine Fasern enthält. Auf diese egalisierte Oberfläche wird anschließend mit einem zweiten Klebstofffilm das dünne Holzfurnier aufgetragen. Durch die vorgenommene Egalisierung der Oberfläche des Kernmaterials können sich dessen Unebenheiten und die Faserstruktur nicht mehr durch das Holzfurnier drücken. Aufgrund des sehr dünnen Holzfurniers kann beim anschließenden Lackieren der Oberfläche die Lackschicht nicht oder nur unwesentlich in die Poren des Holzes nachsacken, so dass sich eine qualitativ sehr hochwertige Lackoberfläche erhalten lässt.

Das Kernmaterial des Verbundwerkstoffs ist bevorzugt ein Polymermaterial, es weist bevorzugt eine Sandwich- oder Honeycomb-Struktur auf. Solche Materialien beziehungsweise Strukturen verbinden geringes Gewicht mit hoher Festigkeit.

Das Aushärtenlassen des Klebstofffilms oder der Klebstofffilme (bevorzugt sowohl des ersten als auch des zweiten Klebstofffilms) findet bevorzugt unter Druck und/oder bei erhöhter Temperatur statt. Bevorzugte Temperaturbereiche sind 100 - 180°C, weiter vorzugsweise 110 - 160°C, weiter vorzugsweise 120 - 150°C.

Bevorzugte Druckbereiche für das Aushärten sind 1-16 kg/cm², weiter vorzugsweise 2-16 kg/cm², weiter vorzugsweise 1-6 kg/cm², weiter vorzugsweise 1-5 kg/cm², weiter vorzugsweise 1 - 4 kg/cm², weiter vorzugsweise 1 - 3 kg/cm², weiter vorzugsweise 2 - 4 kg/cm², weiter vorzugsweise 2-3 kg/cm².

Der Druck wird so gewählt, dass die Belastbarkeit des Kernmaterials nicht überschritten wird. Der Druck wird bevorzugt durch eine Presse aufgebracht.

Das Aushärtenlassen kann über einen Zeitraum vom 3 - 30 min, vorzugsweise 6 - 20 min, weiter vorzugsweise 6 - 15 min erfolgen.

Bevorzugt wird in Schritt a) und/oder d) des Verfahrens des Anspruchs 1 ein Klebstofffilm mit Blattstruktur auf das Kernmaterial aufgelegt. Ein solcher Klebstofffilm ist bei Raumtemperatur im Wesentlichen fest und kann problemlos gehandhabt werden. Erst beim Verpressen unter erhöhter Temperatur verformt er sich thermoplastisch und bewirkt eine feste Klebverbindung zwischen Kernmaterial und Holzfurnier. Der besondere Vorteil von Klebstofffilmen mit Blattstruktur liegt darin, dass sie weniger zum Durchschlagen durch dünne Holzfurniere neigen als flüssig aufgetragene Kleber. Die Blattstruktur erleichtert ein genaues und gleichmäßiges Auftragen eines gewünschten Flächengewichtes des Klebstoffs. Der erste Klebstofffilm kann auch aus zwei oder mehr übereinandergelegten Klebstoffblättern bestehen.

Bevorzugt enthält der erste und/oder zweite Klebstofffilm einen Klebstoff auf Phenolharz- und/oder Epoxid-Basis. Ein Phenolharzklebstoff ist besonders bevorzugt. Solche Phenolharzklebstoffe für sich genommen, sind dem Fachmann geläufig und beispielsweise näher beschrieben in Ullmann's Encyclopedia of Industrial Chemistry, 6. Auflage, Band 26, Seite 1 ff.

Phenolharze weisen zwei für die Erfindung wichtige Eigenschaften auf. Zum einen sind Phenolharze (im Gegensatz zu Epoxidharzen oder dergleichen) brandhemmend und machen daher einen separaten Fireblocker zwischen Kernmaterial und Furnier überflüssig. Zum anderen weisen sie eine ausreichende Haftung sowohl zum Holzfurnier als auch zu den genannten Oberflächen des Kernmaterials auf, so dass sie ein unmittelbares Anbringen des Holzfurniers an diesem Kernmaterial erlauben.

Klebstoffe auf Epoxidharzbasis sind dem Fachmann ebenfalls geläufig und beispielsweise näher beschrieben in Ullmann's Encyclopedia of Industrial Chemistry, 6. Auflage, Band 12, Seite 285 ff. Vorteilhafterweise werden feuerhemmende Klebstoffe auf Epoxidharzbasis, wie zum Beispiel das feuerhemmende Epoxy-Klebesystem Spabond 765 der Firma SP Systems verwendet.

Die furnierte Oberfläche kann eben oder gekrümmt sein. Im ersten Klebstofffilm oder zwischen dem ersten und zweiten Klebstofffilm kann eine Nesselzwischenlage vorgesehen sein, eine solche Nessel kann insbesondere ein Fasergewebe oder Gewirke beispielsweise aus Glasfasern sein.

Das auf die beleimte Oberfläche aufgelegte Holzfurnier hat bevorzugt eine Holzfeuchte im Bereich von 7 - 12 Gew.-%. Eine Holzfeuchte in diesem Bereich erleichtert den Harzfluss des Klebstoffharzes und führt zu einer hinreichenden Benetzung der Furniere und damit einer festen Verbindung zwischen Furnier und Kernmaterial. Um während des Verpressens eine gleichmäßige Druckverteilung zu gewährleisten, sollten Kernmaterial und Furniere in engen Toleranzen kalibriert sein. Gegebenenfalls kann für eine bessere Druckverteilung noch ein Ausgleichspapier in die Presse eingelegt werden.

Erfindungsgemäß weist das Holzfurnier bevorzugt eine Stärke von 0,4 mm oder weniger, weiter vorzugsweise 0,3 mm oder weniger auf.

Bevorzugt weist das Kernmaterial eine Polymermatrix und mindestens an der Oberfläche ein Material ausgewählt aus der Gruppe bestehend aus Glasfasern, Kohlefasern, Aluminium und Aluminiumlegierungen auf. Die Polymermatrix bindet die genannten weiteren Materialien oder bettet sie ein. Wenigstens ein Teil dieser weiteren Materialien ist an der Oberfläche und kommt daher beim Aufbringen des Klebstoffs mit diesem Klebstoff in unmittelbaren Kontakt.

Gegenstand der Erfindung ist ferner ein Verbundwerkstoff, mit einem Kernmaterial, das eine Polymermatrix sowie an der Oberfläche ein Material ausgewählt aus der Gruppe bestehend aus Glasfasern, Kohlefasern, Aluminium und Aluminiumlegierungen aufweist, und einem darauf aufgebrachten Holzfurnier, dadurch gekennzeichnet, dass das Holzfurnier eine Stärke von 0,5 mm oder weniger aufweist und dass Kernmaterial und Holzfurnier durch einen Klebstoff auf Phenolharzbasis verbunden sind.

Das Kernmaterial weist bevorzugt eine Sandwich- oder Honeycomb-Struktur auf. Die Stärke des Holzfurniers liegt bevorzugt bei 0,4 mm oder weniger, weiter vorzugsweise 0,3 mm oder weniger.

Ein Ausführungsbeispiel der Erfindung wird nachfolgend beschrieben.

Eine Sandwichplatte (ECA Waben der Fa. Euro-Composites; enthält DuPont Nomex Aramid-Papierfasern in Phenolharz) wird mit Isopropanol entfettet und die mit Furnier zu belegende Oberfläche anschließend mit Körnung 150 angeschliffen. Die angeschliffene Oberfläche wird nochmals mit einem fusselfreien Papier und Isopropanol entfettet.

Auf die so vorbereitete Oberfläche wird ein Phenolharz-Leimfilm Swedobond GP185 (Fa. Coveright) aufgelegt. Von diesem kommerziell erhältlichen Leimfilm werden zwei übereinander gelegte Lagen verwendet.

In eine Presse wird ein Ausgleichspapier (für eine gleichmäßige Druckbeaufschlagung der Oberfläche) und als Trennfolie eine Mylarfolie eingelegt. Die Presse wird auf 125°C vorgewärmt. Anschließend wird die Sandwichplatte in die vorgewärmte Presse eingelegt und der aufgelegte doppelte Leimfilm bei der genannten Temperatur, einem Druck von 3 kg/cm² und während einer Presszeit von 12 min verklebt. In der Presse wird auf 50°C abgekühlt. Die Sandwichplatte wird anschließend aus der Presse entnommen und weiter abkühlen gelassen.

Der ausgehärtete erste Leimfilm wird im nächsten Schritt mit Körnung 150 geglättet beziehungsweise glattgeschliffen. Auf diesen glattgeschliffenen ersten Leimfilm wird ein weiterer Leimfilm Swedobond GP185 aufgelegt. Auf diesen zweiten Leimfilm wird das Holzfurnier (Stärke 0,3 mm, Furnierfeuchte zwischen 7 und 12 %) aufgelegt.

Die Sandwichplatte mit dem zweiten Leimfilm und dem Furnier wird anschließend in die auf 125°C vorgewärmte Presse eingelegt, in der Presse finden sich wieder Ausgleichspapier und Mylarfolie als Trennfolie. Anschließend wird bei der genannten Temperatur, einem Druck von 3 kg/cm² und über einen Zeitraum von 12 min verklebt. Nach diesem Verkleben wird in der Presse zunächst innerhalb von ca. 30 min. auf 35°C abgekühlt.

Nach der Abkühlung wird die Sandwichplatte der Presse entnommen.

Nach vollständiger Abkühlung und Aushärtung werden die Spitzen des Furniers durch einen Handschliff mit Körnung 220 gebrochen. Der Staub wird abgesaugt. Die Oberfläche wird anschließend mit einem Lack auf Acrylbasis versehen, der kaum in Poren des Furniers nachsackt und daher eine ebene, hochglänzende Lackoberfläche bildet.

## Patentansprüche

1. Verfahren zur Herstellung eines mit einem Holzfurnier belegten Verbundwerkstoffes, der ein Kernmaterial aufweist, mit den Schritten:
a) Auftragen eines ersten Klebstofffilms auf die Oberfläche des Kernmaterials,
b) Aushärtenlassen des ersten Klebstofffilms,
c) Glätten (Glattschleifen) des ersten Klebstofffilms,
d) Auftragen eines zweiten Klebstofffilms auf die Oberfläche des ersten Klebstofffilms,
e) Auflegen eines Holzfurniers mit einer Stärke von 0.5 mm oder weniger auf die beleimte Oberfläche,
f) Aushärtenlassen der Verklebung,
g) Auftragen wenigstens einer Lackschicht auf die Oberfläche des Holzfurniers.

2. Verfahren nach Anspruch 1, **dadurch gekennzeichnet, dass** das Kernmaterial des Verbundwerkstoffes ein Polymermaterial aufweist.

3. Verfahren nach Anspruch 1 oder 2, **dadurch gekennzeichnet, dass** das Kernmaterial eine Sandwichstruktur aufweist.

4. Verfahren nach Anspruch 3, **dadurch gekennzeichnet, dass** das Kernmaterial eine Honeycomb-Struktur aufweist.

5. Verfahren nach einem der Ansprüche 1 bis 4, **dadurch gekennzeichnet, dass** das Aushärtenlassen unter Druck und/oder bei erhöhter Temperatur stattfindet.

6. Verfahren nach Anspruch 5, **dadurch gekennzeichnet, dass** das Aushärtenlassen bei einer Temperatur von 100 - 180°C, vorzugsweise 110 - 160°C, weiter vorzugsweise 120 - 150°C erfolgt.

7. Verfahren nach Anspruch 5 oder 6, **dadurch gekennzeichnet, dass** das Aushärtenlassen bei einem Druck von 1-16 kg/cm², vorzugsweise 2-16 kg/cm², weiter vorzugsweise 1-6 kg/cm², weiter vorzugsweise 1-5 kg/cm², weiter vorzugsweise 1 - 4 kg/cm², weiter vorzugsweise 1-3 kg/cm², weiter vorzugsweise 2-4 kg/cm², weiter vorzugsweise 2-3 kg/cm² erfolgt.

8. Verfahren nach einem der Ansprüche 1 bis 7, **dadurch gekennzeichnet, dass** das Aushärtenlassen über einen Zeitraum von 3 - 30 min, vorzugsweise 6 - 20 min, weiter vorzugsweise 6 - 15 min erfolgt.

9. Verfahren nach einem der Ansprüche 1 bis 8, **dadurch gekennzeichnet, dass** in Schritt a) und/oder d) ein Klebstofffilm mit Blattstruktur auf das Kernmaterial aufgelegt wird.

10. Verfahren nach einem der Ansprüche 1 bis 9, **dadurch gekennzeichnet, dass** der erste und/oder zweite Klebstofffilm einen Klebstoff auf Phenolharz- oder Epoxid-Basis aufweist.

11. Verfahren nach einem der Ansprüche 1 bis 10, **dadurch gekennzeichnet, dass** die furnierte Oberfläche eben ist.

12. Verfahren nach einem der Ansprüche 1 bis 11, **dadurch gekennzeichnet, dass** der erste Klebstofffilm eine Nesselzwischenlage aufweist.

13. Verfahren nach einem der Ansprüche 1 bis 12, **dadurch gekennzeichnet, dass** das in Schritt e) aufgelegte Holzfurnier eine Feuchte von 7 - 12 Gew.-% aufweist.

14. Verfahren nach einem der Ansprüche 1 bis 10, **dadurch gekennzeichnet, dass** das Holzfurnier eine Stärke von 0,4 mm oder weniger, vorzugsweise 0,3 mm oder weniger aufweist.

15. Verfahren nach einem der Ansprüche 1 bis 14, **dadurch gekennzeichnet, dass** das Kernmaterial eine Polymermatrix sowie an der Oberfläche ein Material ausgewählt aus der Gruppe bestehend aus Glasfasern, Kohlefasern, Aluminium und Aluminiumlegierungen aufweist

16. Verbundwerkstoff, mit einem Kernmaterial, das eine Polymermatrix sowie an der Oberfläche ein Material ausgewählt aus der Gruppe bestehend aus Glasfasern, Kohlefasern, Aluminium und Aluminiumlegierungen aufweist, und einem darauf aufgebrachten Holzfurnier, **dadurch gekennzeichnet, dass** das Holzfurnier eine Stärke von 0,5 mm oder weniger aufweist und dass Kernmaterial und Holzfurnier durch einen Klebstoff auf Phenolharzbasis verbunden sind.

17. Verbundwerkstoff nach Anspruch 16, **dadurch gekennzeichnet, dass** das Kernmaterial eine Sandwichstruktur aufweist.

18. Verbundwerkstoff nach Anspruch 16 oder 17, **dadurch gekennzeichnet, dass** das Kernmaterial eine Honeycomb-Struktur aufweist.

19. Verbundwerkstoff nach einem der Ansprüche 16 bis 18, **dadurch gekennzeichnet, dass** das Holzfurnier eine Stärke von 0,4 mm oder weniger, vorzugsweise 0,3 mm oder weniger aufweist.
